# EUROPÄISCHE PATENTSCHRIFT

(11) **EP 2 753 827 B1**
(45) Veröffentlichungstag und Bekanntmachung des Hinweises auf die Patenterteilung: **01.07.2015**
(21) Anmeldenummer: 12759075.0
(22) Anmeldetag: 05.09.2012
(51) Int. Cl.: F24J 2/07, F17D 3/10, F03G 6/06, F24J 2/46, F24J 2/24

(54) **ROHRLEITUNGSSYSTEM UND VERFAHREN ZUR ENTLEERUNG EINES ROHRLEITUNGSSYSTEMS**
PIPELINE SYSTEM AND METHOD FOR EMPTYING A PIPELINE SYSTEM
SYSTÈME DE TUYAUTERIE ET PROCÉDÉ PERMETTANT DE VIDANGER UN SYSTÈME DE TUYAUTERIE

(30) Priorität: 06.09.2011 EP 11180219; 06.09.2011 US 201161531114 P
(43) Veröffentlichungstag der Anmeldung: 16.07.2014
(73) Patentinhaber: BASF SE, 67056 Ludwigshafen (DE)
(72) Erfinder: WORTMANN, Jürgen, 67117 Limburgerhof (DE); LUTZ, Michael, 67346 Speyer (DE); GÄRTNER, Martin, 67549 Worms (DE); SCHIERLE-ARNDT, Kerstin, 64673 Zwingenberg (DE); MAURER, Stephan, 67435 Neustadt-Gimmeldingen (DE); LADENBERGER, Michael, 76848 Darstein (DE); GEYER, Karolin, 68163 Mannheim (DE); GARLICHS, Florian, 67435 Neustadt (DE)
(86) Internationale Anmeldenummer: PCT/EP2012/067300
(87) Internationale Veröffentlichungsnummer: WO 2013/034587

(56) Entgegenhaltungen:
- US-A- 3 968 652
- US-A1- 2004 108 099
- US-A1- 2005 126 560
- US-A1- 2009 260 359
- US-A1- 2010 101 564
- US-A1- 2010 199 974
- US-B1- 6 701 711

## Beschreibung

Die Erfindung betrifft ein Rohrleitungssystem zur Förderung einer Salzschmelze, umfassend mindestens eine von der Salzschmelze durchströmte Rohrleitung, mindestens einen Zulauf und mindestens einen Ablauf. Weiterhin betrifft die Erfindung ein Verfahren zur Entleerung eines Rohrleitungssystems zur Förderung einer Salzschmelze.

Rohrleitungssysteme zur Förderung einer Salzschmelze werden zum Beispiel in Solarkraftwerken, insbesondere in Parabolrinnen-Solarkraftwerken oder Fresnel-Kraftwerken, eingesetzt. Die Rohrleitungssysteme sind dabei im Allgemeinen in Form von Netzwerken gestaltet, die der Erfassung solarer Energie im Solarkraftwerk dienen, wie sie beispielweise aus dem Dokument US 2010/0199974 bekannt sind. In einem derartigen Solarkraftwerk wird die Strahlungsenergie der Sonne mittels Parabolspiegeln auf Receiver konzentriert. Die Kombination von Parabolspiegel und Receiver wird Kollektor genannt. Eine Reihe von Kollektoren wird zu sogenannten Solarschleifen in Reihe geschaltet. Hierzu sind die Receiver jeweils mit dem Rohrleitungssystem verbunden bzw. stellen einen Teil des Rohrleitungssystems dar. Das Rohrleitungssystem wird von einer Wärmeträgerflüssigkeit durchströmt, auf die die von den Receivern erfasste Strahlungsenergie übertragen wird.

Derzeit wird als Wärmeträgerflüssigkeit insbesondere ein Biphenyl/Diphenylether-Gemisch eingesetzt, das jedoch durch seine Zersetzungstemperatur von ca. 400°C in seiner maximalen Betriebstemperatur begrenzt ist. Um höhere Betriebstemperaturen, die einen höheren Wirkungsgrad ermöglichen, zu erhalten, sind andere Wärmeträgerflüssigkeiten erforderlich. Hierzu werden insbesondere Salzschmelzen, beispielsweise sogenanntes Solarsalz, ein Gemisch aus Natriumnitrat und Kaliumnitrat im Verhältnis von 60:40, eingesetzt.

Nachteil von Salzschmelzen ist jedoch, dass diese hochschmelzend sind. Eine Natrium-/Kaliumnitratmischung schmilzt zum Beispiel im Eutektikum, das heißt bei einem Mischungsverhältnis von 44:56 bei einer Temperatur von 218°C. In langen Rohrleitungssystemen, wie diese in Solarkraftwerken auftreten, sind Salzschmelzen mit hohen Schmelzpunkten schwierig sicher zu betreiben. Das Einfrieren der Salzschmelze kann in Rohrleitungssystemen große wirtschaftliche Schäden verursachen. Ursache der Schäden ist zum Beispiel die starke Volumenausdehnung von Salzen beim Aufschmelzen. Es besteht die Gefahr, dass Armaturen und Rohrleitungen aufgedrückt und stark beschädigt werden.

Wenn die Salzschmelze einfriert, was grundsätzlich außerhalb der Betriebszeiten des Solarkraftwerks, das heißt außerhalb der Strahlungszeiten der Sonne oder bei witterungsbedingtem Ausfall der Sonnenstrahlung erfolgen kann, kommt es zu einer Volumenkontraktion, die in Abhängigkeit vom Rohrleitungssystem und Betriebszustand zu einem unterschiedlichen Erstarrungszustand führen kann. Es wird erwartet, dass im Allgemeinen unbelüftet evakuierte Blasen in der Rohrleitung entstehen, die zu mehr oder minder größeren Einheiten zusammenlaufen. Beim Wiederaufschmelzen kann durch gegebenenfalls große räumliche Entfernung zwischen den Aufschmelzstellen mit Volumenexpansion und den evakuierten Bereichen kein ausreichender Volumenausgleich erfolgen, um auftretende Drücke abzubauen.

Um ein Einfrieren der Salzschmelze im Rohrleitungssystem zu verhindern, ist es üblich, bei längeren Stillstandszeiten das Rohrleitungssystem zu entleeren. Bei den derzeitigen Rohrleitungssystemen mit einem Vorratsbehälter für die Salzschmelze nimmt das Entleeren jedoch eine lange Zeit in Anspruch und ist insbesondere bei kurzfristigen Ausfällen, zum Beispiel bei einem Stromausfall nicht sicher zu gewährleisten, sodass insbesondere in solchen Fällen Schäden an den Rohrleitungen auftreten können.

Zum Entleeren ist derzeit ein Entleerungsbehälter vorgesehen, der in einer Senke errichtet und gegen ein Auslaufen mit einer Behälterwanne geschützt ist. Die einzelnen Solarschleifen, die vom Rohrleitungssystem gebildet werden, weisen ein leichtes Gefälle von ca. 0,3 % auf, sodass die in den Rohrleitungen enthaltene Flüssigkeit aufgrund des Gefälles bei einer Entleerung in den Entleerungsbehälter getrieben wird.

Bei heutigen Systemen mit nur einem Entleerungsbehälter ist das geringe Gefälle, das eingesetzt wird, im Allgemeinen nicht geeignet, um insbesondere Rohrleitungssysteme mit langen Rohrleitungen, wie sie in Parabolrinnen-Solarkraftwerken oder Fresnel-Kraftwerken eingesetzt werden und die häufig eine Gesamtrohrleitungslänge von 100 Kilometern aufweisen können, ausreichend schnell und vollständig zu entleeren. Zum Anderen werden üblicherweise Ventile und Hähne eingesetzt, die über keine sichere Stellung verfügen. So können bei einem Energieausfall die Ventile die Solarschleife zum Beispiel nicht in einen entleerten, sicheren Zustand führen. In diesem Fall ist mit dem Einfrieren des als Wärmeträger eingesetzten Salzes sicher zu rechnen. Die Lösung, die elektrische Energieversorgung durch eine Ersatzeinspeisung zu stützen, ist nicht gegen alle Funktionsstörungen in der Anlage ausreichend sicher. Schließlich entstehen bei einer Entleerung in einen zentralen Entleerungsbehälter lange Ablaufwege und Ablaufzeiten mit dem Risiko, dass das Wärmeträgersalz während des Ablaufs erstarrt. Zum anderen kann eine Störung an einer Solarschleife zur Außerbetriebnahme aller anderen Solarschleifen führen.

Des Weiteren sind bei derzeit eingesetzten Rohrleitungssystemen im Allgemeinen Kollektorbänke an den Verteilern für das Wärmeträgermedium über flexible Schläuche oder Kugelgelenkverbindungen angeschlossen. Diese sind jedoch nicht durchgängig fallend ausgelegt. Somit besteht beim Entleeren die Gefahr, dass Salzreste in den flexiblen Anschlüssen verbleiben und dort erstarren.

Derzeit wird zur Minimierung der durch die Salzschmelze auftretenden Probleme in den Rohrleitungen im Allgemeinen Salz mit einem niedrigerem Schmelzpunkt eingesetzt. Derartige Salzschmelzen weisen jedoch erhebliche Nachteile auf. Bekannte Wärmeträgersalze mit niedrigerer Schmelztemperatur sind zum Beispiel Mischungen aus Nitraten und Nitriten des Natrium und Kalium sowie aus Kaliumnitrat, Natriumnitrat und Calciumnitrat.

Derartige Mischungen haben jedoch eine geringere thermische Stabilität als das üblicherweise eingesetzte Solarsalz aus Kaliumnitrat und Natriumnitrat, wodurch der Einsatzbereich auf eine Temperatur von weniger als 500°C eingeschränkt wird. Dies hat zur Folge, dass ein niedrigerer Wirkungsgrad des Kraftwerkes in Kauf genommen werden muss. Zudem müssen die Salze in geschlossenen Systemen gehalten werden, was im Bereich des Solarfeldes zu einem zusätzlichen Aufwand führt, da Inertisierungssysteme, Gasreinigungssysteme oder Gaspendelsysteme im Solarfeld verlegt werden müssen. Die Inertisierung ist notwendig, weil zum Einen bei Nitrit-haltigen Salzen Luftsauerstoff das Nitrit zu Nitrat oxidieren kann und der Festpunkt des Salzes dadurch unkontrolliert steigen kann und bei Calcium-haltigen Systemen Kohlenstoffdioxid mit Calciumionen zu unlöslichem Calciumcarbonat reagiert.

Alternative weitere Salze enthalten in beträchtlichem Umfang teure und wenig verfügbare Elemente, die den wirtschaftlichen Einsatz auf Systeme mit niedrigem Hold-Up beschränken. Teure Komponenten in diesen Salzen sind zum Beispiel Lithium, Rubidium und Cäsium.

Von Salzen abweichende Wärmeträgersysteme haben im Allgemeinen einen hohen Dampfdruck oder verursachen erheblichen Aufwand zum Korrosionsschutz langer Rohrleitungssysteme.

Aus der chemischen Industrie sind zur Beheizung von Salzbadreaktoren Systeme bekannt, bei denen an tiefster Stelle ein Entleerungstank vorliegt, der mit Stickstoff überlagert ist. Im System sind alle Stellgeräte in sicherer Stellung, sodass bei einem ungewollten Betriebszustand das geschmolzene Wärmeträgersalz, im Allgemeinen ein binäres Gemisch aus Natriumnitrit und Kaliumnitrat in den Entleerungsbehälter fließt. Hierzu sind alle Rohrleitungen fallend zum Entleerungsbehälter angeordnet. Die Rohrleitungen besitzen dabei einen so großen Durchmesser, dass die Leitungen leerlaufen, auch wenn keine weiteren Belüftungen vorgesehen sind. Nichtablauffähige Bereiche, beispielsweise oberhalb von Stellgeräten und Fallleitungen besitzen eigene Entleerungsleitungen, über die auch bei Ventilblockade entleert werden kann. Das geschmolzene Wärmeträgersalz wird aus den Entleerungsbehältern mit Hilfe von Tauchpumpen in die chemischen Anlagen transportiert.

Diese typischen Lösungen von Salzbadreaktoren sind in einem Solarfeld aufgrund seiner weiten Ausdehnung jedoch nicht anwendbar und nicht ausreichend. So ist es zum Beispiel ungeeignet, einen Entleerungsbehälter für ein Solarkraftwerk einzusetzen, da der Entleerungsprozess viel zu lange dauern würde, um ein Einfrieren sicher zu verhindern. Zudem werden Salzbadreaktoreri im Allgemeinen kontinuierlich betrieben, das heißt, dass nach dem Anfahren des Reaktors die Anlage kontinuierlich bis zur nächsten Revision durchläuft. Die Anlage ist bis dahin ständig heiß und alle Anlagenteile unter Durchfluss. Hierdurch wird versucht zu vermeiden, dass Verstopfungen durch Erstarren des Salzes auftreten, die - wenn überhaupt - nur sehr aufwändig zu beseitigen sind. Solarkraftwerke sind jedoch einem ständigen An-Aus-Zyklus unterworfen. So wird beispielsweise das Solarfeld nachts nicht mit Strahlungsenergie versorgt. Ein kontinuierlicher heißer Betrieb über alle Anlagenteile würde zu hohen Strahlungsverlusten im Solarfeld führen. Um die hohen Strahlungsverluste zu vermeiden ist es daher sinnvoll, ein Solarkraftwerk diskontinuierlich zu betreiben, um insbesondere nächtliche Energieverluste klein zu halten.

Weiterhin unterscheiden sich Salzbadreaktoren und Rohrleitungssysteme in Solarkraftwerken in Ihrer Größe. So haben Salzbadreaktoren üblicherweise Rohrleitungslängen von höchstens einigen hundert Metern, wohingegen die Länge der Rohrleitungen in Parabolrinnen-Solarkraftwerken 100 Kilometer überschreiten kann. Dies führt auch zu einer um ca. Faktor 1000 größeren Salzmenge. Alleine aufgrund ihrer Größe lassen sich daher diese Rohrleitungssysteme in Solarkraftwerken nicht analog zu Rohrleitungssystemen beispielsweise in Salzbadreaktoren betreiben.

Aufgabe der vorliegenden Erfindung ist es daher, ein Rohrleitungssystem zur Förderung einer Salzschmelze sowie ein Verfahren zur Entleerung eines Rohrleitungssystems zu Förderung einer Salzschmelze bereitzustellen, das in Solarkraftwerken eingesetzt werden kann und die Nachteile aus dem Stand der Technik nicht aufweist.

Gelöst wird die Aufgabe durch ein Rohrleitungssystem zur Förderung einer Salzschmelze, umfassend mindestens eine von der Salzschmelze durchströmte Rohrleitung, mindestens einen Zulauf und mindestens einen Ablauf, wobei die von der Salzschmelze durchströmte Rohrleitung mindestens ein gegenüber der Waagerechten geneigtes Gefälle aufweist und jeweils an den niedrigsten Positionen über ein Entleerungsventil mit einer Entleerungsleitung und an den höchsten Positionen mit einem Belüftungsventil verbunden ist.

Weiterhin wird die Aufgabe gelöst durch ein Verfahren zur Entleerung eines Rohrleitungssystems zur Förderung einer Salzschmelze, bei dem zur Entleerung die Entleerungsventile und das Belüftungsventil geöffnet werden, so dass die Salzschmelze durch die Entleerungsleitung aus der Rohrleitung ausströmen kann.

Das Vorsehen des Belüftungsventils hat den Vorteil, dass beim Entleeren Gas in das Rohrleitungssystem nachströmen kann und auf diese Weise die Entleerung gegenüber einer Entleerung ohne nachströmendes Gas beschleunigt erfolgen kann. Zudem können die Durchmesser der Rohrleitungen kleiner gehalten werden, ohne dass beim Entleeren aus in den Rohrleitungen Salzschmelze aufgestaut wird.

So würde beispielsweise bei einem geschlossenen System ohne ein entsprechendes Belüftungsventil das Ausströmen des Salzes durch entgegenströmende Luft behindert werden. Insbesondere in dünnen Rohrleitungen und bei einem sehr geringen Gefälle würde das Salz überhaupt nicht abströmen können.

Als Gas, das durch die Belüftungsventile dem Rohrleitungssystem zugefügt wird, eignet sich zum Beispiel Luft, wenn ein Salz eingesetzt wird, das in Gegenwart von Sauerstoff nicht oxidiert. So ist insbesondere bei Einsatz eines Solarsalzes, das heißt einer Mischung aus Kaliumnitrat und Natriumnitrat, vorzugsweise im Verhältnis von 40:60, die Belüftung mit Luft möglich, wobei die Luft von Wasserdampf und/oder Kohlendioxid befreit sein kann.

Wenn im Rohrleitungssystem ein Salz eingesetzt wird, das in Gegenwart von Luftsauerstoff chemisch reagiert, beispielsweise ein Salz, das Calciumionen oder Nitrit enthält, wird über das Belüftungsventil ein gegenüber dem eingesetzten Salz inertes Gas, beispielsweise Stickstoff zugeführt.

Um eine vollständige Entleerung des Rohrleitungssystems im Bedarfsfall zu ermöglichen, ist es bevorzugt, dass alle Komponenten des Rohrleitungssystems mit einem Gefälle ausgebildet sind. So sind zum Beispiel Receiverbänke in Parabolrinnen-Solarkraftwerken so beweglich angeordnet, dass die Parabolspiegel die Strahlungsenergie der Sonne immer ideal einfangen können. Um die Receiverbänke bewegen zu können, sind die die Receiverbänke durchlaufenden Rohrleitungen beweglich gestaltet und zum Beispiel durch flexible Leitungen mit fest installierten Anschlüssen wie Sammlern, Verteilern und Entleerungsleitungen verbunden. Auch die flexiblen Leitungen, mit denen die einzelnen Receiverbänke verbunden sind, sind, um ein sicheres Entleeren ermöglichen zu können, vom Belüftungsventil zum Entleerungsventil stets fallend zu installieren. Bewegungsbögen, wie sie nach dem Stand der Technik derzeit verwendet werden und die nach oben verlaufen, sind hierbei zu vermeiden. Bei beweglichen Receiverbänken ist zumindest eine Position vorzusehen, in der ein Ablauf der Salzschmelze möglich ist. Diese Position ist eigensicher ("fail-safe") auszuführen, so dass sich die Receiverbänke auch bei Energieausfall in die Position, aus der ein Ablauf der Salzschmelze möglich ist, bewegen. Dies lässt sich zum Beispiel federgetrieben oder druckluftgetrieben erreichen. Wenn die Position, aus der ein Ablauf der Salzschmelze möglich ist, druckluftgetrieben erreicht werden soll, werden vorzugsweise Druckluftspeicher eingesetzt.

In einer bevorzugten Ausführungsform ist jedes Entleerungsventil und jedes Belüftungsventil im Rohrleitungssystem ein Ventil mit eigensicherer Funktion ("fail-safe"), das bei Auftreten einer eine Entleerung erfordernden Situation öffnet. Derartige eine Entleerung erfordernde Situationen sind zum Beispiel das Auftreten einer Übertemperatur oder eine Untertemperatur in der Solarschleife, das Auftreten eines Überdrucks oder eines Unterdrucks in der Solarschleife, eine Abweichung der Durchflussmenge durch die Solarschleife oder auch ein Stromausfall. Weiterhin kann ein Entleeren auch bedingt sein zum Beispiel durch eine automatische Steuerung, beispielsweise eine Nachtentleerung im laufenden Betrieb oder auch eine Entleerung, wenn die Sonneneinstrahlung nicht ausreichend ist, um das Solarkraftwerk sicher betreiben zu können. Weiterhin soll eine Entleerung auch bei einem manuellen Eingriff möglich sein.

Das Auftreten einer Über- oder Untertemperatur in der Solarschleife oder auch eine Isolationsstörung kann beispielsweise mit einem Infrarot-optischen Scansystem über das gesamte Solarfeld schnell lokalisiert werden. Auch ein solches Scansystem kann zum Beispiel eine Entleerung des Rohrleitungssystems auslösen, wenn von der Norm abweichende Werte gemessen werden.

Die als Ventil mit eigensicherer Funktion eingesetzten Entleerungsventile und Belüftungsventile sind im normalen Betrieb des Solarkraftwerkes geschlossen. Wenn eine Entleerung erfolgt, werden die Ventile automatisch geöffnet. Beim Belüftungsventil bedeutet dies ein Öffnen des Ventils, bei dem Entleerungsventil bedeutet dies ein Öffnen der Rohrleitung in die Entleerungsleitung, so dass die Salzschmelze aus dem Rohrleitungssystem in einen Entleerungsbehälter abfließen kann.

In einem Solarkraftwerk sind die einzelnen Rohrleitungen des Rohrleitungssystems üblicherweise als u-förmige Schleife gestaltet, wobei Zulauf und Ablauf jeweils an den Schenkelenden der u-förmigen Schleife angeordnet sind. Die Schenkelenden sind dabei im Allgemeinen jeweils mit einer Sammelleitung verbunden, wobei über eine Sammelleitung im laufenden Betrieb die Salzschmelze der Rohrleitung zugeführt wird und über die andere Sammelleitung die erwärmte Salzschmelze aus der Rohrleitung abgeführt und in einen Verdampfer geleitet wird. Im Verdampfer wird mit der Salzschmelze Wasser verdampft und überhitzt, und mit dem so erzeugten Dampf eine Turbine zur Stromerzeugung angetrieben. Im Verdampfer wird die Salzschmelze abgekühlt und über die Sammelleitung wieder in die Rohrleitungen des Rohrleitungssystems eingeleitet, wo die Salzschmelze in den Receivern wieder aufgeheizt wird.

In einer bevorzugten Ausführungsform der Erfindung sind die am Rohrleitungssystem vorgesehenen Entleerungsventile derart angeordnet, dass beim Öffnen sowohl die Rohrleitung als auch der Zulauf beziehungsweise Ablauf in die Sammelleitungen entleert werden. Um ein schnelles Entleeren des Rohrleitungssystems zu ermöglichen, ist es dabei bevorzugt, dass jede einzelne Solarschleife über Entleerungsventile in die Entleerungsleitung entleert werden kann.

Um die jeweiligen Wege, die die Salzschmelze zur Entleerung zurücklegen muss zu minimieren, ist es weiterhin bevorzugt, das Belüftungsventil mittig zwischen den Entleerungsventilen der u-förmigen Rohrleitung zu positionieren. Auf diese Weise ist der maximale Weg vom Belüftungsventil zum Entleerungsventil in der jeweiligen Rohrleitung immer gleich lang.

Um das Entleeren der Rohrleitung weiter beschleunigen zu können, ist es weiterhin bevorzugt, wenn das Belüftungsventil mit einer Druckgasleitung verbunden ist. In Abhängigkeit des eingesetzten Salzes kann als Druckgas zum Beispiel Druckluft verwendet werden, wenn in der Salzschmelze keine Komponenten enthalten sind, die mit Bestandteilen der Luft chemisch reagieren. Alternativ ist es auch möglich, als Druckgas zum Beispiel ein Inertgas, beispielsweise Stickstoff, oder auch synthetische Luft oder CO₂-gereinigte Luft einzusetzen. Durch die Verwendung eines Druckgases wird bei Öffnen des Belüftungsventiles Gas in die Rohrleitung unter Druck eingeführt und so die Salzschmelze aus der Rohrleitung ausgepresst. Dies führt zu einem beschleunigten Entleeren. Um eine ausfallsichere Druckgasversorgung zu erhalten, ist es besonders bevorzugt, wenn das Druckgas in Druckgasspeichern, die über die Druckgasleitung an das Belüftungsventil angeschlossen sind, bereitgestellt wird. Die Druckgasspeicher können dabei auch dezentral aufgestellt sein.

In einer Ausführungsform der Erfindung umfasst das Rohrleitungssystem mindestens zwei vorzugsweise u-förmig gestaltete Rohrleitungen, die jeweils ein gegenüber der Waagerechten geneigtes Gefälle aufweisen und die jeweils an den niedrigsten Positionen über ein Entleerungsventils mit einer Entleerungsleitung und an den höchsten Positionen mit einem Belüftungsventil verbunden sind. Durch den Einsatz von mindestens zwei, bevorzugt mehr als zwei Rohrleitungen lässt sich die Gesamtlänge der einzelnen Rohrleitungen jeweils reduzieren. Die Verbindung der jeweiligen Rohrleitung mit einem Entleerungsventil dient weiterhin dazu, dass jede einzelne Rohrleitung separat entleert werden kann und nicht sämtliche Rohrleitungen über die gemeinsame Sammelleitung entleert werden müssen. Auch dies erlaubt ein schnelleres Entleeren als ein Entleeren über die Sammelleitungen in einen gemeinsamen Entleerungsbehälter.

Um die aus den Rohrleitungen entnommene Salzschmelze aufzufangen, ist es bevorzugt, die Entleerungsleitungen jeweils mit einem Entleerungsbehälter zu verbinden. Hierbei ist es weiterhin vorteilhaft, wenn die Entleerungsbehälter nahe der jeweiligen Rohrleitung positioniert sind, um lange Wege von der Rohrleitung in den Rohrleitungsbehälter und damit lange Entleerungsleitungen zu vermeiden.

Um das Salz aus den Rohrleitungen vollständig entfernen zu können, ist es weiterhin vorteilhaft, wenn die Entleerungsbehälter jeweils ein Volumen aufweisen, das mindestens dem Volumen aller über die jeweiligen Entleerungsleitungen in die Entleerungsbehälter mündenden Rohrleitungen entspricht.

Um die Anzahl der Entleerungsbehälter zu reduzieren, ist es weiterhin möglich, das Rohrleitungssystem zu segmentieren, wobei jedes Segment mindestens zwei Rohrleitungen aufweist und jedem Segment ein Entleerungsbehälter zugeordnet ist. Die Segmente werden dabei so gewählt, dass ein ausreichend schnelles Entleeren in den Entleerungsbehälter möglich ist und die Gesamtrohrleitungslänge, insbesondere der Entleerungsleitungen noch kurz genug gehalten werden kann. In einem solchen Segment ist es zum Beispiel möglich, die einzelnen Rohrleitungen des Rohrleitungssystems zunächst über Entleerungsventile in jeweils eine Entleerungsleitung zu entleeren, die Entleerungsleitungen zu einer gemeinsamen Sammelleitung zusammenzufügen und diese in den Entleerungsbehälter münden zu lassen. Wenn nun bei der Entleerung zum Beispiel in einer Rohrleitung Probleme auftreten, führt dies dazu, dass alle höchstens in dem die Rohrleitung enthaltenden Segment Schäden auftreten können bzw. dieses Segment nicht wieder problemlos angefahren werden kann. Die übrigen Segmente sind jedoch weiterhin problemlos zu betreiben.

Alternativ oder zusätzlich zur Beschickung der Rohrleitung über das Belüftungsventil mit einem Druckgas ist es auch möglich, die Entleerungsbehälter jeweils zu evakuieren. In diesem Fall führt der Luftdruck bei Öffnen der Belüftungsventile zu einem beschleunigten Entleeren der Rohrleitungen in den Entleerungsbehälter. Das Evakuieren der Entleerungsbehälter hat den weiteren Vorteil, dass ein schnelles und sicheres Entleeren auch dann möglich ist, wenn beispielsweise aufgrund eines Stromausfalls nicht ausreichend Druckgas zur Verfügung steht. Eine druckgetriebene schnelle Entleerung ist in diesem Fall gegenüber Umgebungsdruck bei Öffnen des Belüftungsventils gegen die Umgebung möglich.

Weiterhin ist es alternativ oder zusätzlich auch möglich, dass die Rohrleitung so geführt wird, dass diese nahe dem Entleerungsbehälter ein großes Gefälle mit hoher hydrostatischer Potentialdifferenz besitzt. Hierzu ist es zum Beispiel möglich, den Entleerungsbehälter in einer Senke, beispielsweise mit einer Tiefe von 2 bis 5 m, zu platzieren. In diesem Fall wirkt auf die Salzschmelze in der Solarschleife ein hoher treibender hydrostatischer Druck. Das Eindringen und Aufsteigen von Gasen aus der Gasüberlagerung des Entleerungsbehälters entgegen der Strömungs- und Entleerungsrichtung kann durch eine getauchte Einführung der Salzschmelze durch ein Tauchrohr in den Entleerungsbehälter verhindert werden. Damit die Flüssigkeitssäule während der Strömung nicht reißt, ist es notwendig, dass an jeder Stelle der Flüssigkeitssäule ein absoluter Druck herrscht, der größer ist als der Dampfdruck der Salzschmelze. Der Druck in der Salzschmelze lässt sich beispielsweise durch einen hohen Strömungswiderstand in der Nähe des Entleerungsbehälters oder in dem Tauchrohr in den Entleerungsbehälter eingestellt werden. Hierzu können zum Beispiel am Ende des Tauchrohres Prallplatten oder Umlenksysteme installiert werden, die zudem den Vorteil aufweisen, dass eine erosive Korrosion an der Behälterwand vermindert wird.

Bei Einsatz des Rohrleitungssystems in einem Solarfeld eines Solarkraftwerks, insbesondere in einem Solarfeld eines Parabolrinnen-Solarkraftwerks oder Fresnel-Kraftwerks enthält die Salzschmelze vorzugsweise mindestens ein Nitrit oder mindestens ein Nitrat der Alkalimetalle oder Erdalkalimetalle. Bevorzugt sind Nitrit oder Nitrat des Natrium, Kalium oder Calcium oder eine beliebige Mischung dieser Salze. Besonders bevorzugt wird eine Mischung aus Natriumnitrat und Kaliumnitrat im Verhältnis von 60:40 eingesetzt. Weiterhin besonders bevorzugt ist eine Mischung aus Nitrit und Nitrat von Kalium und Natrium in beliebiger Mischung, dem sogenannten Nitritsalz. Neben diesem sogenannten Solarsalz können auch beliebige andere als Wärmeträger geeignete hochschmelzende Salze eingesetzt werden. Hochschmelzend im Rahmen der vorliegenden Erfindung bedeutet eine Schmelztemperatur von mindestens 100°C. Weiterhin ist es bevorzugt, wenn das Salz auch oberhalb von Temperaturen von 470°C thermisch stabil ist.

Ausführungsbeispiele der Erfindung sind in den Figuren dargestellt und werden in der nachfolgenden Beschreibung näher erläutert.

Es zeigen:
- Figur 1: Ein Solarfeld eines Parabolrinnen-Solarkraftwerks mit einem Entleerungsbehälter gemäß dem Stand der Technik,
- Figur 2: eine Solarschleife eines Solarkraftwerks mit Entleerungsvorrichtung gemäß der Erfindung,
- Figur 3: einen Anfangs- und einen Endabschnitt einer Solarschleife,
- Figur 4: ein Solarfeld eines Parabolrinnen-Solarkraftwerks mit segmentiertem Rohrleitungssystem.

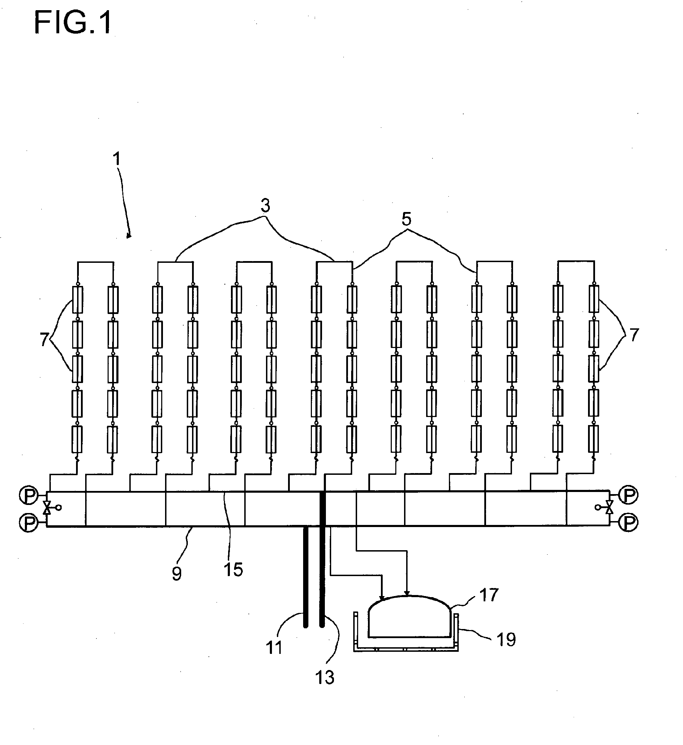

Figur 1 zeigt ein Solarfeld eines Parabolrinnen-Solarkraftwerks mit einem Entleerungsbehälter gemäß dem Stand der Technik.

Ein Solarfeld 1 eines Parabolrinnen-Solarkraftwerks weist mehre Solarschleifen 3 auf. Die Solarschleifen 3 werden jeweils aus einer Rohrleitung 5 gebildet, die von einem Wärmeträger durchströmt wird. Als Wärmeträger wird erfindungsgemäß eine Salzschmelze, vorzugsweise Solarsalz, das heißt eine Mischung aus Kaliumnitrat und Natriumnitrat im Verhältnis von 40:60, oder als Eutektikum mit Mischungsverhältnis von 44:56, oder Nitritsalz eingesetzt.

In Solarschleifen 3 wird der Wärmeträger mittels einstrahlender Solarenergie erwärmt. Hierzu sind die Rohrleitungen 5 segmentweise von einem Glasrohr umschlossen. Der Raum zwischen der Rohrleitung 5 und dem Glasrohr 7 wird evakuiert. Unterhalb der Glasrohre 7 befindet sich weiterhin eine Parabolrinne, in der einstrahlendes Sonnenlicht reflektiert und auf das Glasrohr 7 gelenkt wird. Durch die einfallende Strahlung auf das Glasrohr 7 wird Wärme an den Wärmeträger, der die Rohrleitung 5 durchströmt, geleitet, wodurch der Wärmeträger aufgeheizt wird.

Der die Rohrleitungen 5 der Solarschleifen 3 durchströmende Wärmeträger strömt in einen Sammler 9 und vom Sammler 9 weiter in einem Wärmeträgerablauf 11. Der durch den Wärmeträgerablauf 11 strömende Wärmeträger wird üblicherweise in einen Wärmetauscher geleitet, in dem dieser Wärme an einen Dampfkreislauf abgibt, mit dem zum Beispiel Turbinen zur Stromerzeugung betrieben werden. Der den Wärmetauscher verlassende abgekühlte Wärmeträger wird über einen Wärmeträgerzulauf 13 in einen Verteiler 15 geleitet und vom Verteiler 15 in die Rohrleitungen 5 der Solarschleifen 3.

Um in Stillstandzeiten die Rohrleitungen des Solarkraftwerkes entleeren zu können, ist ein Entleerungsbehälter 17 vorgesehen. Der Entleerungsbehälter 17 ist dabei mit dem Verteiler 15 und dem Sammler 9 verbunden. Über den Sammler 9 und den Verteiler 15 läuft die Salzschmelze in den Entleerungsbehälter 17.

Um im Falle einer Beschädigung des Entleerungsbehälters 17 zu vermeiden, dass Salzschmelze ausläuft und sich unkontrolliert in die Umgebung ausbreitet, ist der Entleerungsbehälter 17 vorzugsweise von einer Wanne 19 umschlossen, wobei das Fassungsvermögen der Wanne 19 dem Volumen des Entleerungsbehälters 17 entspricht.

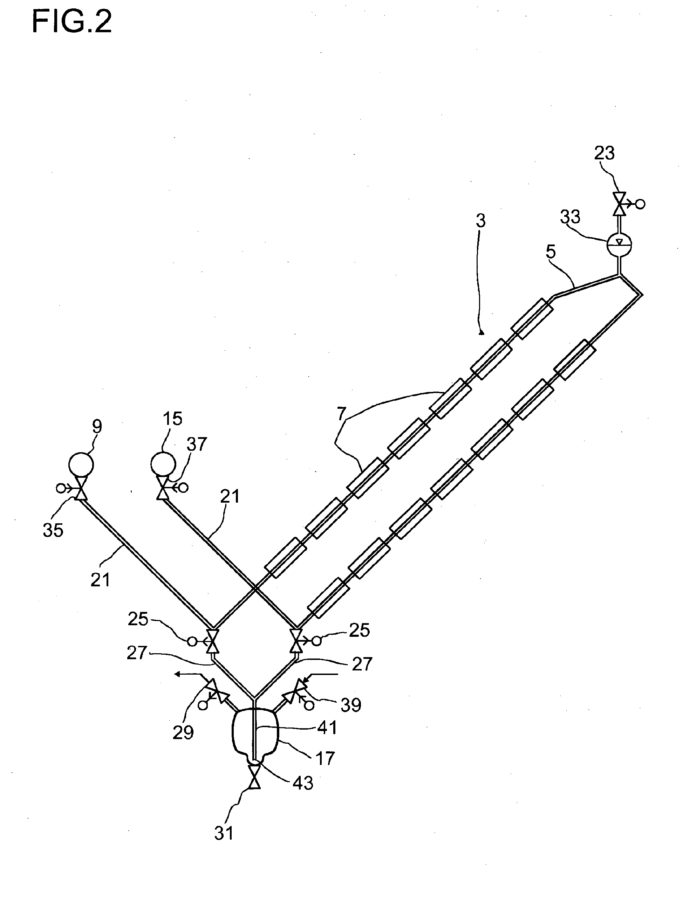

In Figur 2 ist beispielhaft eine Solarschleife mit erfindungsgemäß ausgebildetem Rohrleitungssystem dargestellt.

Die Solarschleife 3 weist eine Rohrleitung 5 auf, die im Wesentlichen u-förmig gestaltet ist und mit einem Schenkel mit dem Sammler 9 und mit dem zweiten Schenkel mit dem Verteiler 15 verbunden ist. Die Verbindung von der Rohrleitung 5 zum Sammler 9 bzw. Verteiler 15 erfolgt über Verbindungsrohre 21.

Erfindungsgemäß weist die Rohrleitung 5 ein gegenüber der Horizontalen geneigtes Gefälle auf. Das Gefälle liegt dabei vorzugsweise im Bereich von 0 bis 1 %. In einer Ausführungsform liegt das Gefälle vorzugsweise im Bereich von 0,1 bis 0,5 %, besonders bevorzugt im Bereich von 0,2 bis 0,4 %. In einer alternativen Ausführungsform liegt das Gefälle im Bereich von 0 bis 0,3 %, bevorzugt in einem Bereich von 0,01 bis 0,2%. Das Gefälle der Rohrleitung 5 erstreckt sich dabei jeweils von einem Belüftungsventil 23 zu einem Entleerungsventil 25. In der hier dargestellten Ausführungsform ist jeder der Schenkel der u-förmigen Rohrleitung 5 mit einem Entleerungsventil 25 verbunden. Das Entleerungsventil 25 verschließt oder öffnet eine Verbindung von der Rohrleitung 5 und dem Verbindungsrohr 21 mit einer Entleerungsleitung 27. Im normalen Betrieb ist das Entleerungsventil 25 geschlossen. Die Entleerungsleitungen 27 münden in einem Entleerungsbehälter 17, der so groß gestaltet ist, dass die gesamte in der Rohrleitung 5 enthaltene Salzschmelze aufgenommen werden kann.

Der Entleerungsbehälter 17 ist mit einem Entlüftungsventil 29 ausgestattet, das öffnet, wenn die Rohrleitung 5 entleert wird. Hierdurch wird ein Druckaufbau im Entleerungsbehälter 17 vermieden. Um bei Bedarf den Entleerungsbehälter 17 entleeren zu können, weist dieser weiterhin ein Ablassventil 31 auf.

Die eingesetzten Ventile, das heißt Belüftungsventil 23, Entleerungsventile 25, Entlüftungsventile 29 und Ablassventil 31 können jede beliebige Form annehmen. So können zum Beispiel Drehschieberventile, Schieberventile, Klappen und Hähne eingesetzt werden. Weiterhin werden im Rahmen der vorliegenden Erfindung unter dem Ventil auch Schieber und Klappen verstanden, die nur zwischen einer offenen Stellung und einer geschlossenen Stellung geschaltet werden können. Bevorzugt werden jedoch Ventile eingesetzt, mit denen auch der Durchfluss gesteuert werden kann, das heißt die neben der Stellung "auf" und "zu" auch jeden beliebigen alternativen Öffnungsquerschnitt realisieren können.

Im Normalbetrieb des Solarkraftwerkes kann das Belüftungsventil 23 auch als Entlüftungsventil dienen, zum Beispiel um Inertgase aus der Solarschmelze abführen zu können. Hierzu ist vorzugsweise zusätzlich zum Belüftungsventil 23 ein Phasenscheider 33 vorgesehen. Im Phasenscheider 33 wird das Gas aus der Salzschmelze abgetrennt und kann dann über das Ventil 23 abgeführt werden.

Im Normalbetrieb sind das Belüftungsventil 23 und die Entleerungsventile 25 geschlossen. Die Salzschmelze strömt vom Verteiler 15 in die Rohrleitung 5 und wird in den von den Glasrohren 7 und Parabolrinnenspiegeln gebildeten Receivern erwärmt. Die so erwärmte Solarschmelze strömt dann über das zweite Verbindungsrohr 21 und den Sammler 9 in einen Wärmetauscher, wo die Wärme an einen angeschlossenen Dampfkreislauf abgegeben wird.

Bei einer Funktionsstörung der Anlage oder bei Energieverlust, beispielsweise durch einen Stromausfall oder auch bei einer gewünschten Entleerung wird das Belüftungsventil 23 geöffnet. Gleichzeitig schließen das Sammlerventil 35 und das Verteilerventil 37, so dass keine Salzschmelze mehr aus dem Sammler 9 bzw. dem Verteiler 15 über die Verbindungsrohre 21 in die Rohrleitung 5 gelangen kann. Weiterhin werden die Entleerungsventile 25 so geschaltet, dass die Verbindung von der Rohrleitung 5 in die Entleerungsleitung 27 geöffnet wird. Durch das Gefälle der Rohrleitung 5 wird durch die Schwerkraft getrieben die Salzschmelze aus der Rohrleitung 5 in den Entleerungsbehälter 17 durch ein Tauchrohr 41 entleert. Um den Entleerungsvorgang zu unterstützen ist es möglich, am Belüftungsventil 23 ein Druckgas anzulegen, um durch den aufgebrachten Druck die Salzschmelze aus die Rohrleitung 5 in den Entleerungsbehälter zu drücken. Zusätzlich oder alternativ ist es auch möglich, den Entleerungsbehälter 17 zu evakuieren, um den Entleerungsprozess weiter zu beschleunigen.

Wenn der Entleerungsbehälter 17 nicht evakuiert ist, wird das Entlüftungsventil 29 geöffnet, damit im Entleerungsbehälter 17 enthaltenes Gas während des Entleerungsvorganges ausströmen kann, damit sich im Entleerungsbehälter 17 kein Druck aufbaut.

Um die Solarschleife nach einer Entleerung wieder anzufahren, wird zunächst das Entlüftungsventil 29 geschlossen. Anschließend werden die Entleerungsventile 25 so geschaltet, dass die Salzschmelze aus dem Entleerungsbehälter 17 zurück in die Rohrleitung 5 strömen kann. Anschließend wird über ein Belüftungsventil 39 ein Druckgas auf den Entleerungsbehälter 17 gegeben. Das Druckgas ist dabei in Abhängigkeit vom eingesetzten Salz zum Beispiel Druckluft, synthetische Luft, CO₂-gereinigte Luft oder ein inertes Gas, beispielsweise Stickstoff. Druckluft kann nur dann verwendet werden, wenn mit Bestandteilen der Luft keine chemische Reaktion mit den Bestandteilen des Salzes erfolgt.

Durch das Aufbringen des Druckgases durch das Belüftungsventil 39 in den Entleerungsbehälter 17 baut sich im Entleerungsbehälter 17 ein Druck auf. Der sich aufbauende Druck treibt den im Behälter 17 enthaltenen Wärmeträger durch das als Steigrohr wirkende Tauchrohr 41 in die Entleerungsleitungen 27 und von dort durch die Entleerungsventile 25 zurück in die Rohrleitung 5. Die Entleerungsventile 25 werden dabei zu Beginn des Befüllvorganges langsam geöffnet. Am erwarteten Ende des Befüllvorganges werden die Ventile 25 langsam wieder geschlossen. Das tatsächliche Ende des Befüllvorganges wird bei geringster Strömung gegebenenfalls im Pulsbetrieb gesucht. Ausgelöst wird der Befüllungsstopp über einen Phasendetektor 43 am Ende des Tauchrohres 41. Mit Beendigung des Befüllvorganges wird das Belüftungsventil 23 geschlossen. Weiterhin werden auch die Entleerungsventile 25 geschlossen, so dass die Strömung nun von der Rohrleitung 5 über die Verbindungsrohre 21 zu Sammler 9 und Verteiler 15 erfolgt. Um den Betrieb aufzunehmen werden dann auch das Sammlerventil 35 und das Verteilerventil 37 geöffnet. Gas, das sich in der Rohrleitung befindet, wird mit dem Salzstrom mitgeführt und durch die Inertgasabscheidung, die durch den Phasenscheider 33 und das Belüftungsventil 23 realisiert wird, abgeführt.

Wenn sich im Entleerungsbehälter 17 zu viel Salz befindet, kann durch Aufgeben von Druckgas über das Belüftungsventil 39 und Öffnen eines der Entleerungsventile 25 bei gleichzeitig geöffnetem Sammlerventil 35 oder Verteilerventil 37 und geschlossenem Belüftungsventil 23 die Überschussmenge in den Salzkreislauf abgegeben werden.

Die Geschwindigkeit, mit der die Salzschmelze durch die Rohrleitungen 9, 15, 21 und 5 strömt, kann durch den Öffnungsgrad der jeweiligen Ventile 35, 37 gesteuert werden.

Alternativ zur Zufuhr der Salzschmelze aus dem Entleerungsbehälter 17 durch Aufbringen von Druckluft ist es auch möglich, eine Tauchpumpe einzusetzen. Die Tauchpumpe kann auch zusätzlich zum Aufbringen von Druckluft genutzt werden.

Die Entleerungsventile 25 und das Belüftungsventil 23 sind vorzugsweise als Ventile mit eigensicherer Funktion ausgebildet und so geschaltet, dass diese bei einer Funktionsstörung jeweils öffnen, so dass die in der Rohrleitung 5 enthaltene Salzschmelze in den Entleerungsbehälter 17 ausströmen kann. Die Befüllung und Entleerung jeweils einer Solarschleife 3 in einen Entleerungsbehälter 17 erlaubt ein schnelles Befüllen und Entleeren der Solarschleifen 3, so das mit einer hohen Funktionssicherheit eine abendliche Entleerung und eine morgendliche Befüllung des Leitungssystems durchgeführt werden kann.

Eine Erhöhung der Funktionssicherheit wird gegeben, wenn ein geeignetes Beheizungssystem in den Rohrleitungen vorgesehen wird. Zur Beheizung ist es zum Beispiel möglich, im Inneren der Rohrleitung einen Heizleiter zu führen. In diesem Fall wird das Salz innerhalb der Rohrleitung zunächst am Heizleiter aufgeschmolzen und bildet einen Kanal, durch den geschmolzenes Salz abtransportiert werden kann. Hierdurch wird vermieden, dass aufgrund der Volumenausdehnung der Salzschmelze zu hohe Drücke auf die Rohrleitung 5 ausgeübt werden. Eine gleichmäßige Temperaturverteilung entlang des Heizleiters führt zudem dazu, dass das Salz um den Heizleiter über die gesamte Länge der Rohrleitung 5 gleichzeitig schmilzt und so auch ein Kanal gebildet wird, durch den Salzschmelze strömen kann und so der Druck ausgeglichen werden kann.

Ein Überhitzen der Salzschmelze in der Rohrleitung wird verhindert, indem eine Defokussierungseinrichtung in Sicherheitsqualität der Kollektoren eingesetzt wird.

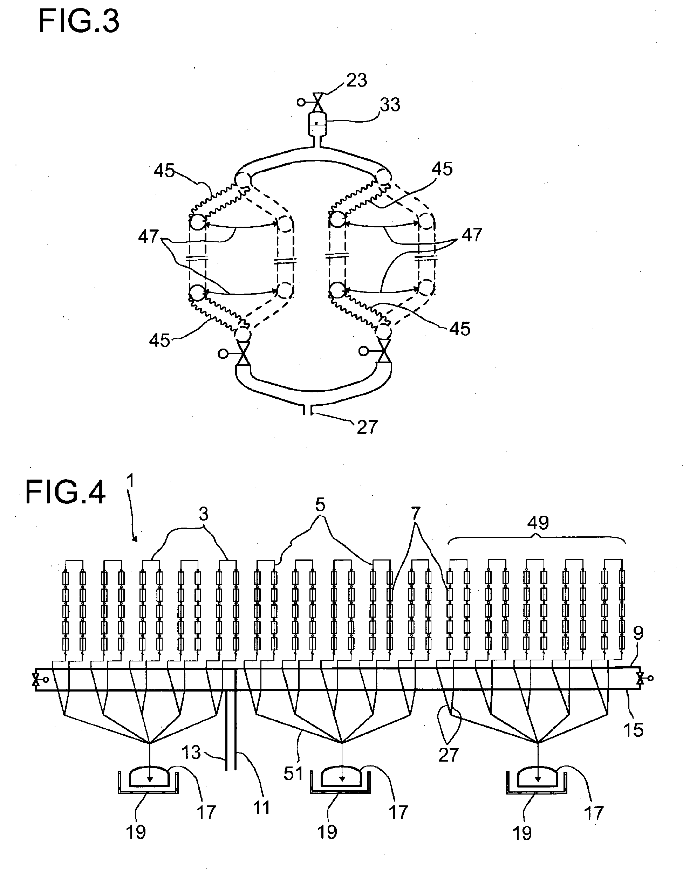

In Figur 3 ist schematisch das zulaufseitige Ende und das mit dem Belüftungsventil versehene Ende einer Solarschleife dargestellt.

Um das Solarkraftwerk immer optimal betreiben zu können, sind die einzelnen Receiver vorzugsweise beweglich angeordnet, so dass die Parabolspiegel die Strahlungsenergie der Sonne optimal einfangen können. Hierzu müssen die Rohrleitungen der einzelnen Receiver verschwenkt werden können. Um dies zu ermöglichen, sind zwischen den beweglichen Rohrleitungen der Receiver und fest installierten Anschlüssen, wie Sammlern, Verteilern und der Entleerungsleitung 27 flexible Leitungen 45 installiert. Die flexiblen Leitungen 45 sind dabei so gestaltet, dass diese von Belüftungsventil 23 zur Entleerungsleitung 27 ein Gefälle aufweisen, damit die Salzschmelze ausströmen kann.

Gestrichelt ist in Figur 3 eine zweite Position der Rohrleitungen gezeigt.

Das Belüftungsventil 23 und die Entleerungsleitung 27 sind in der in Figur 3 dargestellten Ausführungsform fixiert und die zwischen der Entleerungsleitung 27 und dem Belüftungsventil 23 liegenden Rohrleitungen sind schwenkbar gestaltet. Das Verschwenken ist durch Pfeile 47 gezeigt.

Ein Solarfeld, in dem das Rohrleitungssystem segmentiert ist, ist in Figur 4 dargestellt.

In der in Figur 4 dargestellten Ausführungsform sind jeweils 5 Solarschleifen 3 zu einem Segment 49 zusammengefasst. Jedem Segment 49 ist dabei ein Entleerungsbehälter 17 zugeordnet, in den die Entleerungsleitungen 27 der jeweiligen Solarschleifen 3 münden. Hierbei werden die Entleerungsleitungen 27 einer Solarschleife 3 in eine Sammelleitung 51 zusammengeführt, die dann in den Entleerungsbehälter 17 mündet. Die Größe des Entleerungsbehälters 17 wird dabei so gewählt, dass die Salzschmelze aus allen Solarschleifen 3 eines Segmentes 45 vom Entleerungsbehälter 17 aufgenommen werden kann. Die Anzahl der Solarschleifen 3, die einem Entleerungsbehälter 17 zugeordnet sind, wird dabei so gewählt, dass eine Entleerung des gesamten Solarfeldes in einer vorgegebenen Zeit durchgeführt werden kann. Hierbei ist zu berücksichtigen, dass die Entleerungszeit umso größer ist, je mehr Solarschleifen 3 in einen Behälter 17 entleert werden müssen.

### Bezugszeichenliste

- 1: Solarfeld
- 3: Solarschleife
- 5: Rohrleitung
- 7: Glasrohr
- 9: Sammler
- 11: Wärmeträgerablauf
- 13: Wärmeträgerzulauf
- 15: Verteiler
- 17: Entleerungsbehälter
- 19: Wanne
- 21: Verbindungsrohr
- 23: Belüftungsventil
- 25: Entleerungsventil
- 27: Entleerungsleitung
- 29: Entlüftungsventil
- 31: Ablassventil
- 33: Phasenscheider
- 35: Sammlerventil
- 37: Verteilerventil
- 39: Belüftungsventil
- 41: Tauchrohr
- 43: Phasendetektor
- 45: Flexible Leitung
- 47: Schwenkbereich
- 49: Segment
- 51: Sammelleitung

## Patentansprüche

1. Rohrleitungssystem zur Förderung einer Salzschmelze in einem Parabolrinnen-Solarkraftwerk oder einem Fresnel-Kraftwerk, umfassend mindestens eine von der Salzschmelze durchströmte Rohrleitung (5), mindestens einen Zulauf und mindestens einen Ablauf, **dadurch gekennzeichnet, dass** die von der Salzschmelze durchströmte Rohrleitung (5) mindestens ein gegenüber der Waagerechten geneigtes Gefälle aufweist und jeweils an den niedrigsten Positionen über ein Entleerungsventil (25) mit einer Entleerungsleitung (27) und an den höchsten Positionen mit einem Belüftungsventil (23) verbunden ist.

2. Rohrleitungssystem gemäß Anspruch 1, **dadurch gekennzeichnet, dass** jedes Entleerungsventil (25) und jedes Belüftungsventil (23) ein Ventil mit eigensicherer Funktion ist, das bei Auftreten einer eine Entleerung erfordernden Situation öffnet.

3. Rohrteitungssystem gemäß Anspruch 1 oder 2, **dadurch gekennzeichnet, dass** die Rohrleitung (5) als u-förmige Schleife gestaltet ist, wobei Zulauf und Ablauf jeweils an den Schenkelenden der u-förmigen Schleife angeordnet sind, wobei das Belüftungsventil (23) vorzugsweise mittig zwischen Zulauf und Ablauf in der Rohrleitung (5) angeordnet ist.

4. Rohrleitungssystem gemäß einem der Ansprüche 1 bis 3, **dadurch gekennzeichnet, dass** das Belüftungsventil (23) mit einer Druckgasleitung verbunden ist.

5. Rohrleitungssystem gemäß einem der Ansprüche 1 bis 4, **dadurch gekennzeichnet, dass** mindestens zwei Rohrleitungen (5) umfasst sind, die jeweils ein gegenüber der Waagerechten geneigtes Gefälle aufweisen und jeweils an den niedrigsten Positionen über ein Entleerungsventil (25) mit einer Entleerungsleitung (27) und an den höchsten Positionen mit einem Belüftungsventil (23) verbunden sind.

6. Rohrieftungssystem gemäß einem der Ansprüche 1 bis 5, **dadurch gekennzeichnet, dass** die Entleerungsleitung (27) in einen Entleerungsbehälter (17) mündet, wobei der Entleerungsbehälter (17) vorzugsweise ein Volumen aufweist, das mindestens dem Volumen aller über die jeweiligen Entleerungsleitungen (27) in den Entleerungsbehälter (17) mündenden Rohrleitungen (5) entspricht.

7. Rohrleitungssystem gemäß Anspruch 6, **dadurch gekennzeichnet, dass** der Entleerungsbehälter (17) evakuiert ist.

8. Rohrleitungssystem gemäß Anspruch 6 oder 7, **dadurch gekennzeichnet, dass** der Entleerungsbehälter (17) ein Tauchrohr (41) umfasst, durch das die Salzschmelze aus der Rohrleitung (5) in den Entleerungsbehälter (17) entleert wird, wobei vorzugsweise am Ende des Tauchrohres (41) ein Phasendetektor (43) angeordnet ist.

9. Rohrleitungssystem gemäß einem der Ansprüche 1 bis 8, **dadurch gekennzeichnet, dass** das Rohrleitungssystem segmentiert ist, wobei jedes Segment (49) mindestens zwei Rohrleitungen (5) aufweist und jedem Segment (49) ein Entleerungsbehälter zugeordnet ist.

10. Rohrleitungssystem gemäß einem der Ansprüche 1 bis 9, **dadurch gekennzeichnet, dass** die Rohrleitung (5) mindestens einen flexiblen Abschnitt (45) umfasst, der ein Bewegen der Rohrleitung (5) ermöglicht, wobei der flexible Abschnitt (45) so gestaltet ist, dass die Rohrleitung (5) auch im Bereich des flexiblen Abschnitts (45) ein Gefälle vom Belüftungsventil (23) in Richtung des Entleerungsventils (25) aufweist.

11. Rohrleltungssystem gemäß einem der Ansprüche 1 bis 10, **dadurch gekennzeichnet, dass** die Salzschmelze mindestens ein Nitrit oder mindestens ein Nitrat des Natrium, Kalium oder Calcium oder eine beliebige Mischung dieser Salze enthält.

12. Verfahren zur Entleerung eines Rohrleitungssystems zur Förderung einer Salzschmelze in einem Parabolrinnen-Solarkraftwerk oder einem Fresnel-Kraftwerk gemäß einem der Ansprüche 1 bis 11 bei dem zur Entleerung die Entleerungsventile (25) und das Belüftungsventil (23) geöffnet werden, so dass die Salzschmelze durch die Entleerungsleitung (27) aus der Rohrleitung (5) ausströmen kann.

13. Verfahren gemäß Anspruch 12, **dadurch gekennzeichnet, dass** das Rohrleitungssystem entleert wird, wenn Druck, Temperatur und/oder Volumenstrom der Salzschmelze durch die Rohrleitung um mehr als eine vorgegebene Toleranz von einem vorgegebenen Sollwert abweichen oder wenn eine manuelle Entleerung oder eine betriebsbedingte automatische Entleerung der Rohrleitung durchgeführt werden soll.

14. Verfahren gemäß Anspruch 12 oder 13, **dadurch gekennzeichnet, dass** bei einer Entleerung durch das Belüftungsventil (23) ein unter Druck stehendes Gas in die Rohrleitung (5) eingeleitet wird, wobei das unter Druck stehende Gas vorzugsweise Stickstoff, synthetische Luft, CO₂-gereinigte Luft oder Luft ist.

15. Verfahren gemäß einem der Ansprüche 12 bis 14, **dadurch gekennzeichnet, dass** der Druck in der Salzschmelze durch einen hohen Strömungswiderstand in der Nähe des Entleerungsbehälters oder im Tauchrohr in den Entleerungsbehälter so eingestellt wird, dass an jeder Stelle der Flüssigkeitssäule ein absoluter Druck herrscht, der größer ist als der Dampfdruck der Salzschmelze.

## Claims

1. A pipeline system for conveying a salt melt in a parabolic trough solar power plant or a Fresnel power plant, comprising at least one pipeline (5) through which the salt melt flows, at least one inlet and at least one outlet, **characterized in that** the pipeline (5) through which the salt melt flows has at least one gradient inclined with respect to the horizontal and is respectively connected at the lowest positions via a drainage valve (25) to a drainage line (27) and at the highest positions to a venting valve (23).

2. The pipeline system as claimed in claim 1, **characterized in that** each drainage valve (25) and each venting valve (23) is a valve with a failsafe function, which opens when a situation requiring drainage occurs.

3. The pipeline system as claimed in claim 1 or 2, **characterized in that** the pipeline (5) is configured as a U-shaped loop, the inlet and outlet respectively being arranged at the branch ends of the U-shaped loop, the venting valve (23) preferably being arranged centrally between the inlet and the outlet in the pipeline (5).

4. The pipeline system as claimed in one of claims 1 to 3, **characterized in that** the venting valve (23) is connected to a pressurized gas line.

5. The pipeline system as claimed in one of claims 1 to 4, **characterized in that** it comprises at least two pipelines (5), which respectively have a gradient inclined with respect to the horizontal and are respectively connected at the lowest positions via a drainage valve (25) to a drainage line (27) and at the highest positions to a venting valve (23).

6. The pipeline system as claimed in one of claims 1 to 5, **characterized in that** the drainage line (27) opens into a drainage container (17), the drainage container (17) preferably having a volume which corresponds at least to the volume of all the pipelines (5) opening via the respective drainage lines (27) into the drainage container (17).

7. The pipeline system as claimed in claim 6, **characterized in that** the drainage container (17) is evacuated.

8. The pipeline system as claimed in claim 6 or 7, **characterized in that** the drainage container (17) comprises an immersion pipe (41), through which the salt melt is drained from the pipeline (5) into the drainage container (17), a phase detector (43) preferably being arranged at the end of the immersion pipe (41).

9. The pipeline system as claimed in one of claims 1 to 8, **characterized in that** the pipeline system is segmented, each segment (49) having at least two pipelines (5) and each segment (49) being assigned a drainage container.

10. The pipeline system as claimed in one of claims 1 to 9, **characterized in that** the pipeline (5) comprises at least one flexible section (45) which allows movement of the pipeline (5), the flexible section (45) being configured so that the pipeline (5) also has a gradient from the venting valve (23) in the direction of the drainage valve (25) in the region of the flexible section (45).

11. The pipeline system as claimed in one of claims 1 to 10, **characterized in that** the salt melt contains at least one nitrite or at least one nitrate of sodium, potassium or calcium, or any mixture of these salts.

12. A method for draining a pipeline system for conveying a salt melt in a parabolic trough solar power plant or a Fresnel power plant as claimed in one of claims 1 to 11, in which the drainage valves (25) and the venting valve (23) are opened for drainage so that the salt melt can flow out of the pipeline (5) through the drainage line (27).

13. The method as claimed in claim 12, **characterized in that** the pipeline system is drained when the pressure, temperature and/or volume flow rate of the salt melt through the pipeline differ by more than a predetermined tolerance from a predetermined setpoint value, or when manual drainage or operationally required automatic drainage of the pipeline needs to be carried out.

14. The method as claimed in claim 12 or 13, **characterized in that** a pressurized gas is introduced into the pipeline (5) through the venting valve (23) during drainage, the pressurized gas preferably being nitrogen, synthetic air, CO₂-scrubbed air or air.

15. The method as claimed in one of claims 12 to 14, **characterized in that** the pressure in the salt melt is set by a high flow resistance in the vicinity of the drainage container or in the immersion pipe into the drainage container such that an absolute pressure that is greater than the vapor pressure of the salt melt prevails at every point of the liquid column.

## Revendications

1. Système de conduits tubulaires pour le transport de sel fondu dans une centrale solaire à cylindre parabolique ou une centrale de Fresnel, comprenant au moins un conduit tubulaire (5) traversé par le sel fondu, au moins une amenée et au moins une sortie, **caractérisé en ce que**
le conduit tubulaire (5) traversé par le sel fondu présente au moins une pente inclinée par rapport à l'horizontale et est raccordé aux emplacements les plus bas à un conduit de vidange (27) par une soupape de vidange (25) et aux emplacements les plus élevés à une soupape d'évent (23).

2. Système de conduits tubulaires selon la revendication 1, **caractérisé en ce que** chaque soupape de vidange (25) et chaque soupape d'évent (23) sont des soupapes à fonctionnement sécurisé qui s'ouvrent lorsque survient une situation qui nécessite une vidange.

3. Système de conduits tubulaires selon les revendications 1 ou 2, **caractérisé en ce que** le conduit tubulaire (5) est configuré comme boucle en forme de U, l'amenée et la sortie étant disposées chacune à une extrémité des branches de la boucle en forme de U, la soupape d'évent (23) étant disposée dans le conduit tubulaire (5) de préférence au milieu entre l'amenée et la sortie.

4. Système de conduits tubulaires selon l'une des revendications 1 à 3, **caractérisé en ce que** la soupape d'évent (23) est raccordée à un conduit de gaz sous pression.

5. Système de conduits tubulaires selon l'une des revendications 1 à 4, **caractérisé en ce qu'**au moins deux conduits tubulaires (5) sont prévus, présentent chacun une pente inclinée par rapport à l'horizontale et sont chacun relié aux emplacements les plus bas à un conduit de vidange (27) par l'intermédiaire d'une soupape de vidange (25) et aux emplacements les plus élevés à une soupape d'évent (23).

6. Système de conduits tubulaires selon l'une des revendications 1 à 5, **caractérisé en ce que** le conduit de vidange (27) débouche dans un récipient de vidange (17), le récipient de vidange (17) présentant de préférence un volume qui correspond au moins au volume de tous les conduits tubulaires (5) qui débouchent dans le récipient de vidange (17) par l'intermédiaire des conduits de vidange (27) respectifs.

7. Système de conduits tubulaires selon la revendication 6, **caractérisé en ce que** le récipient de vidange (17) est mis sous vide.

8. Système de conduits tubulaires selon les revendications 6 ou 7, **caractérisé en ce que** le récipient de vidange (17) comporte un tube plongeur (41) par lequel le sel fondu est vidé depuis le conduit tubulaire (5) jusque dans le récipient de vidange (17), un détecteur de phase (43) étant disposé de préférence à l'extrémité du tube plongeur (41).

9. Système de conduits tubulaires selon l'une des revendications 1 à 8, **caractérisé en ce que** le système de conduits tubulaires est segmenté, chaque segment (49) présentant au moins deux conduits tubulaires (5) et un récipient de vidange étant associé à chaque segment (49) .

10. Système de conduits tubulaires selon l'une des revendications 1 à 9, **caractérisé en ce que** le conduit tubulaire (5) présente au moins une section flexible (45) qui permet un déplacement du conduit tubulaire (5), la section flexible (45) étant configurée de telle sorte que le conduit tubulaire (5) présente également au niveau de la section flexible (45) une pente allant de la soupape d'évent (23) à la soupape de vidange (25) .

11. Système de conduits tubulaires selon l'une des revendications 1 à 10, **caractérisé en ce que** le sel fondu contient au moins un nitrite ou au moins un nitrate de sodium, de potassium ou de calcium ou un mélange quelconque de ces sels.

12. Procédé de vidange d'un système de conduit tubulaire destiné à transporter un sel fondu dans une centrale solaire à cylindre parabolique ou une centrale de Fresnel selon l'une des revendications 1 à 11, dans lequel les soupapes de vidange (25) et la soupape d'évent (23) sont ouvertes pour la vidange de telle sorte que le sel fondu puisse s'écouler du conduit tubulaire (5) par le conduit de vidange (27).

13. Procédé selon la revendication 12, **caractérisé en ce que** le système de conduit tubulaire est vidé lorsque la pression, la température et/ou le débit volumique du sel fondu dans le conduit tubulaire s'écartent d'une valeur de consigne prédéterminée à plus d'une tolérance prédéterminée ou si une vidange manuelle ou une vidange automatique du conduit tubulaire doivent être exécutées pour des raisons de fonctionnement.

14. Procédé selon les revendications 12 ou 13, **caractérisé en ce qu'**en cas de vidange par la soupape d'évent (23), un gaz sous pression est introduit dans le conduit tubulaire (5), le gaz sous pression étant de préférence de l'azote, de l'air synthétique, de l'air débarrassé du CO₂ ou de l'air.

15. Procédé selon l'une des revendications 12 à 14, **caractérisé en ce que** la pression qui règne dans le sel fondu est établie par une haute résistance à l'écoulement à proximité du récipient de vidange ou dans le tube plongeur du récipient de vidange, de telle sorte qu'en chaque emplacement de la colonne de liquide règne une pression absolue supérieure à la tension de vapeur du sel fondu.
